# EUROPEAN PATENT APPLICATION

(11) **EP 1 199 659 A2**
(43) Date of publication of application: **24.04.2002**
(21) Application number: 01124204.7
(22) Date of filing: 12.10.2001
(51) Int. Cl.: G06F 17/60

(54) **Manufacturing information providing system**

(30) Priority: 13.10.2000 JP 2000314269
(71) Applicant: Daishowa Seiki Co., Ltd., Higashiosaka-shi, Osaka 579-8013 (JP)
(72) Inventor: Nakajima, Hidehito, Higashiosaka-shi, Osaka (JP); Sawamura, Isao, Higashiosaka-shi, Osaka (JP)
(74) Representative: HOFFMANN - EITLE

(57) **Abstract**

A manufacturing information providing system is provided. The system makes it possible to efficiently plan manufacturing information to improve manufacturing achievements. The system enables a manufacturing plant to manufacture a desired high-level product in a short time even if the plant has no know-how to manufacture it. Manufacturing information is obtained by planning and/or preparing a manufacturing machine, a manufacturing process, arrangements or the like necessary for the business of a user 1 engaged in manufacturing products. The obtained information is packaged and provided to the user through a communication medium 6, such as electronic mail or a home page on the Internet, or a portable storage medium 7, such as an FD, a CD, an MO or a DVD.

## Description

### BACKGROUND OF THE INVENTION AND RELATED ART STATEMENT

The present invention relates to a manufacturing information providing system, on which a server engaged in the planning, creation (preparation) and/or provision of manufacturing information provides a user as a manufacturer with manufacturing information planned and/or created on a manufacturing process, a setup and/or the like by the server at the user's request.

In general, in order to manufacture products efficiently and economically in a short time in manufacturing plants, it is necessary to study and/or examine what kinds of machines, tools, jigs, work (cutting materials), gauges (measuring instruments), processes and setups (arrangements) should be used.

Therefore, conventionally, suitable or adequate manufacturing machines have been selected and manufacturing processes, setups, etc. have been planned and created to manufacture intended or expected products, and the products have been manufactured based on manufacturing information including the contents thus planned and created. In many case, such manufacturing information has been planned exclusively by the personnel in charge of the production technique etc. or the operators of the production equipment in manufacturing plants.

In recent years, however, the trends of personnel cut etc. in the departments of production technique of manufacturing plants due to corporate rationalization for economical reasons etc. have decreased the number of experienced staffs having manufacturing know-how, and have made it impossible to spare enough time to plan manufacturing information. This has occasionally made the contents of the planned information inadequate. The manufacturing efficiency may be worsened due to the surplus of time spent on the setup of manufacturing equipment on the part of the operators. Under the existing circumstances, it is difficult to undertake high standards of production equal to or beyond the levels of the manufacturing know-how owned by the manufacturing plants.

### SUMMARY OF THE INVENTION

Therefore, an object of the present invention is to provide a manufacturing information providing system on which a server engaged in the planning, creation (preparation) and provision of manufacturing information can efficiently plan manufacturing information to improve the manufacturing achievements, and on which a manufacturing plant can manufacture a desired high-level product in a short time even if the plant has no know-how to manufacture it.

Another object of the present invention is to provide a manufacturing information providing system on which a user as a manufacturer can effectively utilize manufacturing information received from a server even if the user can plan and prepare no satisfactory manufacturing information due to a shortage of experienced responsible staffs having production engineering know-how.

By using the manufacturing information providing system, the user can efficiently make setups or arrangements, which might otherwise delay manufacturing processes. This enables the user to improve its manufacturing achievements. By leaving the planning of manufacturing information to the server as collective professionals, the user can reduce the burden of its own.

Another object of the present invention is to provide a manufacturing information providing system under which a user's equipment investment can be reduced because there is no need to install in the user's manufacturing plant any expensive hardware and software such as CAD/CAM equipment required for the planning and creation of manufacturing information.

Another object of the present invention is to provide a manufacturing information providing system on which a user can manufacture a desired product by an advanced process in a short time even if the user has no know-how to manufacture it.

Another object of the present invention is to provide a manufacturing information providing system with which a user can obtain visual manufacturing information, which is easier to understand.

Other objects of the present invention will become evident from the description set force below.

### BRIEF DESCRIPTION OF THE DRAWINGS

Fig. 1 is an explanatory drawing showing the correlation between the transmission and reception of manufacturing information via the Internet or another communication medium, in a manufacturing information providing system embodying the present invention.

Fig. 2 is an explanatory drawing showing the correlation between the transmission and reception of manufacturing information through an FD, a CD, an MO, a DVD or another portable storage medium and a transport means, in a manufacturing information providing system embodying the present invention.

Fig. 3 is a flow chart showing the procedures for transmitting and receiving manufacturing information in the manufacturing information providing system shown in Fig. 1 or 2.

Fig. 4 shows displayed images or pictures of manufacturing information that a user receives from a server in a manufacturing information providing system embodying the present invention.

### DETAILED DESCRIPTION OF PREFERRED EMBODIMENTS OF THE INVENTION

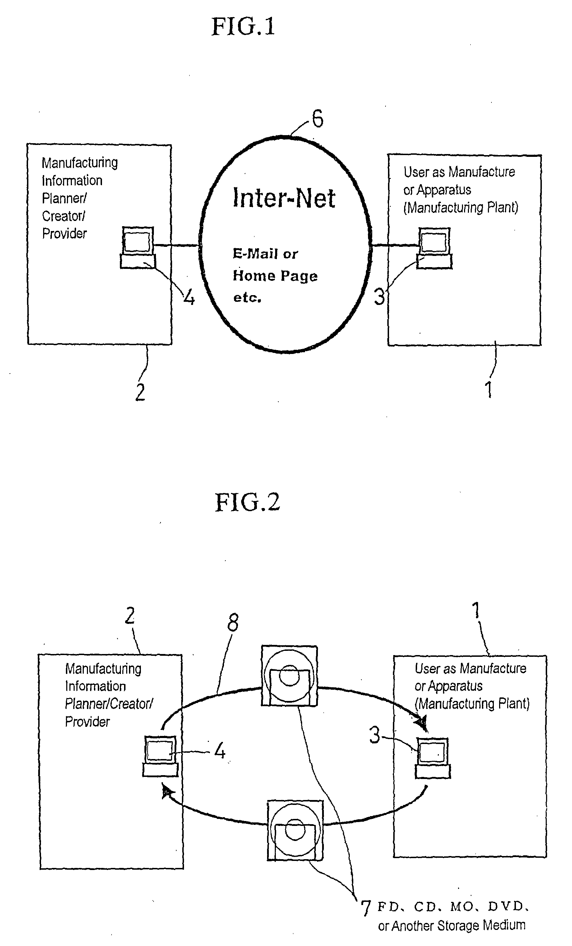

Fig. 1 is an explanatory drawing showing the transmission and reception of manufacturing information via electronic mail, home pages or another communication medium on the Internet in a manufacturing information providing system embodying the present invention.

With reference to Fig. 1, a user 1 manufactures various products, while a server 2 plans, prepares (creates) and provides manufacturing information on the selection of machines, processes, arrangements (setups), etc. necessary for the user's manufacturing.

The user 1 and server 2 have personal computers, work stations or other hardware systems 3 and 4 installed on their respective sides. The hardware systems 3 and 4 have software installed therein with which it is possible to package manufacturing information, access the packaged information and communicate via a known communication means. The hardware systems 3 and 4 are connected via the Internet or another communication medium 6. When the packaged information is transmitted and received via a communication means or the like, it may be compressed data.

Each of the hardware systems 3 and 4 is fitted with a connection unit or device (not shown) that can be connected to the communication medium 6. Each of the hardware systems 3 and 4 is also fitted with a drive or unit (not shown) with which data can be read from and written in an FD, a CD, an MO, a DVD or another portable storage medium.

By way of example, there may be a need to manufacture a part by means of a machining center (M/C) or another machine tool. In this case, it is necessary to decide what types of machining center, tools, jigs and work should be used. It is also necessary to select one or more suitable gauges for determining if the manufactured part satisfies the expected dimensional accuracy. It is further necessary to plan and determine what types of processes and arrangements should be undergone to efficiently manufacture the part.

Therefore, the manufacturing information about various products that is transmitted between the user 1 and server 2 includes information on working (or machining) processes with which machine tools etc. operate, assembly processes and measuring processes, depending on the types of the products manufactured by the user 1. Specifically, the manufacturing information may be part or all of information about manufacturing machines as mentioned above, and tools, jigs, work, gauges and NC programs for use with these machines, and also about process instructions, working instructions, working manuals, assembly instructions, assembly manuals, measuring instructions and measuring manuals therefor.

In Fig. 1, packaged manufacturing information is transmitted and received in the form of suitably compressed data through the communication medium 6, such as electronic mail or home pages on the Internet. Alternatively, as shown in Fig. 2, manufacturing information may be transmitted and received through an FD, a CD, an MO, a DVD or another portable storage medium 7 and a transport means 8.

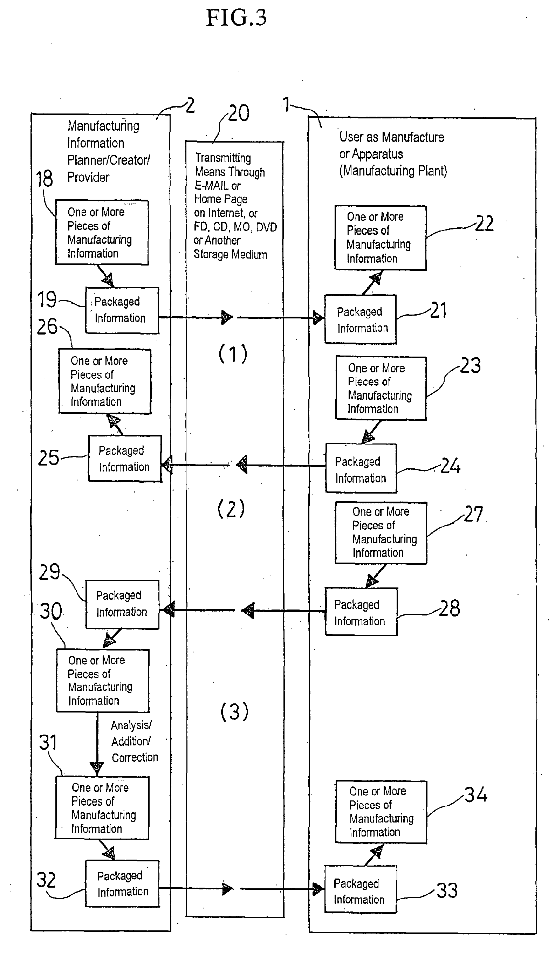

Fig. 3 is a flow chart showing the procedures for transmitting and receiving manufacturing information in the manufacturing information providing system shown in Fig. 1 or 2.

Manufacturing information can be provided by the following three methods.

### 1. Method for Nearly One-Way Provision of Manufacturing Information from Server 2 to User 1

The server 2 plans and prepares manufacturing information 18 for the user 1, and packages the information (19). The server 2 provides the user 1 with the packaged information through electronic mail or home pages on the Internet, or through an FD, a CD, an MO, a DVD or another portable storage medium and a transport means 20.

This manufacturing information may consist of some pieces of information linked together. Information about dynamic and still picture images, and information about drawings may be added to the manufacturing information.

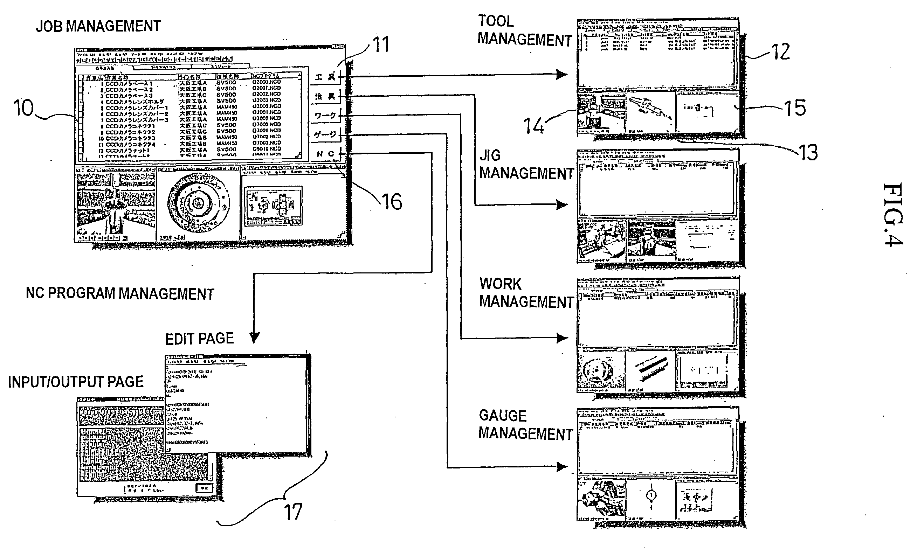

The user 1 receives the packaged manufacturing information 21 from the server 2, extracts the received information and uses the extracted information. If the manufacturing information 22 sent from the server 2 consists of pieces of information linked together, and if information about dynamic and still picture images and information about drawings are added at the same time to the manufacturing information, the manufacturing information 22 may be displayed pictorially as shown in Fig. 4.

By way of example, when Job Management page 10 showing a list of jobs is displayed, one of the jobs may be selected. If Tool button 11 for the selected job is clicked, Tool Management page 12 is displayed as a page division or an overlay with respect to Job Management page 10. Tool Management page 12 shows a list of tools for use in the operation process associated with the job. If one of the tools is selected on Tool Management page 12, a still picture image 13, a dynamic picture image 14 and a drawing 15 are displayed as page divisions or overlays. The still picture image 13 shows the appearance of the tool. The dynamic picture image 14 shows how the tool is used. The drawing shows the size and shape of the tool.

If NC button 16 for the list of jobs on Job Management page 10 is clicked, pages 17 are displayed as page divisions or overlays with respect to Job Management page 10. The pages 17 show the management information about an NC program for use in the associated operation process.

Consequently, the pages 10 - 17 make it possible to confirm the contents of the pieces of manufacturing information.

### 2. Method for Accumulation of Manufacturing Information by Server 2

The user 1 originally plans and prepares manufacturing information 23, and packages it. The user 1 sends the server 2 the packaged information 24 through electronic mail or home pages on the Internet, or through an FD, a CD, an MO, a DVD or another portable storage medium and a transport means 20. The server 2 accumulates the manufacturing information 25, 26 received from the user 1. The server 2 utilizes the accumulated information for the providing system by planning and preparing manufacturing information for future users 1.

### 3. Method for Acquisition by Server 2 of Requests about Manufacturing Information from User 1, Preparation by Server 2 of New Manufacturing Information Reflecting User's Requests, and Provision of New Manufacturing Information to User 1

The user 1 originally plans and prepares manufacturing information 27, and packages it. The user 1 sends the server 2 the packaged information 28 through electronic mail or home pages on the Internet, or through an FD, a CD, an MO, a DVD or another portable storage medium and a transport means 20.

Receiving the manufacturing information 29, 30, the server 2 checks, analyzes and examines the manufacturing information 30. Subsequently, the server 2 makes planning, preparations, additions, corrections and/or other improvements in accordance with the manufacturing objects and the requests of the user 1.

The server 2 packages the improved manufacturing information 31 again (32) and then provides the user 1 with the manufacturing information 33, 34 in a way similar to Method 1.

Thus, any of Methods 1 - 3 enables the user 1, who has a manufacturing plant, to effectively make practical use of manufacturing information provided by the server 2, even if the user 1 can plan and prepare no satisfactory manufacturing information because of a decrease in number of experienced people having manufacturing know-how in the production engineering department or the like, or for another reason.

The user 1 can entrust the planning of manufacturing information to the server 2 as a group of specialists, and consequently reduce the burden on itself. The user 1 does not need to install in its manufacturing plant any expensive hardware and software such as CAD/CAM equipment required for the planning, preparation, etc. of manufacturing information. This makes it possible to reduce the user's equipment investment.

By making practical use of the manufacturing information providing system, the user 1 can efficiently make arrangements, which might otherwise cause manufacturing processes to be delayed. Consequently, the user 1 can improve its manufacturing results. Even if the user 1 has no know-how, it can manufacture a desired product by an advanced process in a short time.

By using this system, the user 1 can obtain visual manufacturing information, which is easier to understand.

This system makes it possible to send manufacturing information to and receive manufacturing information from a remote place instantly by simple operation or manipulation. This makes it possible to faithfully transfer intended arrangements etc.

## Claims

1. A manufacturing information providing system on which a server engaged in planning, preparing or providing manufacturing information obtains manufacturing information by planning and/or preparing a manufacturing machine, a manufacturing process, arrangements or the like necessary for the business of a user engaged in manufacturing products, packages the obtained information, and provides the user with the packaged information through a communication medium, such as electronic mail or a home page on the Internet, or a portable storage medium, such as an FD, a CD, an MO or a DVD.

2. A manufacturing information providing system on which a server engaged in planning, preparing or providing manufacturing information receives, from a user engaged in manufacturing products, manufacturing information obtained by the user planning and/or preparing a manufacturing machine, a manufacturing process, arrangements or the like for use in the manufacture by the user, in packaged form through a communication medium, such as electronic mail or a home page on the Internet, or a portable storage medium, such as an FD, a CD, an MO or a DVD, and accumulates the received information.

3. A manufacturing information providing system on which a server engaged in planning, preparing or providing manufacturing information receives, from a user engaged in manufacturing products, manufacturing information obtained by the user planning and/or preparing a manufacturing machine, a manufacturing process, arrangements or the like for use in the manufacture by the user, in packaged form through a communication medium, such as electronic mail or a home page on the Internet, or a portable storage medium, such as an FD, a CD, an MO or a DVD, checks, analyzes and examines the received information, subsequently makes an improvement such as a correction or an addition in the manufacturing information required for the manufacturing object of the user, packages the improved information again, and provides the packaged information to the user.

4. The manufacturing information providing system defined in any one of Claims 1 - 3, wherein the packaged manufacturing information comprises pieces of information associated with each other.

5. The manufacturing information providing system defined in any one of Claims 1 - 4, wherein the manufacturing information is information about a working process for a machine tool or the like.

6. The manufacturing information providing system defined in any one of Claims 1 - 4, wherein the manufacturing information is information about an assembly process.

7. The manufacturing information providing system defined in any one of Claims 1 - 4, wherein the manufacturing information is information about a measuring process.

8. The manufacturing information providing system defined in any one of Claims 1 - 4, wherein information about a dynamic picture image, a still picture image or a drawing is added to the manufacturing information.

9. The manufacturing information providing system defined in any one of Claims 1 - 4, wherein the manufacturing information is information about at least one of a tool, a jig, work, a gauge, an NC program, process instructions therefor, working instructions therefor, a working manual therefor, assembly instructions therefor, an assembly manual therefor, measuring instructions therefor and a measuring manual therefor.

10. The manufacturing information providing system defined in any one of Claims 1 - 4, wherein the manufacturing information is sent and received in packaged and compressed form through a communication medium, such as electronic mail or a home page on the Internet, or a portable storage medium, such as an FD, a CD, an MO or a DVD.
